(19) Europäisches Patentamt
European Patent Office
Office européen des brevets

(11) Veröffentlichungsnummer: 0 453 896 A2

# (12) EUROPÄISCHE PATENTANMELDUNG

(21) Anmeldenummer: 91105827.9

(51) Int. Cl.5: C09B 62/255

(22) Anmeldetag: 12.04.91

(30) Priorität: 25.04.90 DE 4013115

(43) Veröffentlichungstag der Anmeldung:
30.10.91 Patentblatt 91/44

(84) Benannte Vertragsstaaten:
CH DE FR GB LI

(71) Anmelder: BAYER AG
W-5090 Leverkusen 1 Bayerwerk(DE)

(72) Erfinder: Kunde, Klaus, Dr.
Moltkestrasse 5
W-5206 Neunkirchen 1(DE)
Erfinder: Henk, Hermann, Dr.
Roggendorfstrasse 55
W-5000 Köln 80(DE)
Erfinder: Stöhr, Frank-Michael, Dr.
Am Thelen Siefen 10
W-5068 Odenthal(DE)
Erfinder: Schündehütte, Karl-Heinz, Prof. Dr.
Klief 75
W-5090 Leverkusen 3(DE)

## (54) Reaktivfarbstoffe.

(57) Die neuen Reaktivfarbstoffe der Formel

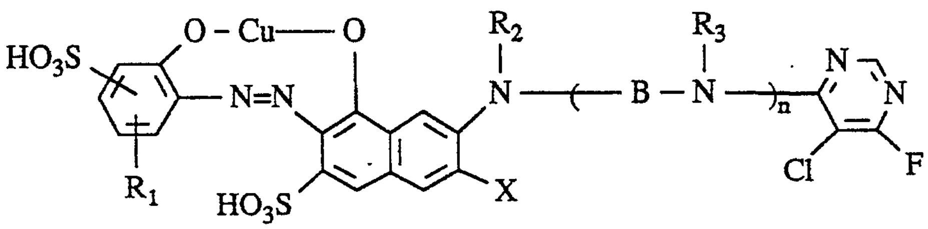

(I)

in welcher die Substituenten $R_1$, $R_2$, $R_3$, X, B und n die in der Beschreibung angegebene Bedeutung haben, eignen sich hervorragend zum Färben oder Bedrucken von natürlichen oder synthetischen, hydroxyl- oder amidgruppenhaltigen Materialien.

EP 0 453 896 A2

Gegenstand der vorliegenden Erfindung sind neue Reaktivfarbstoffe der Formel

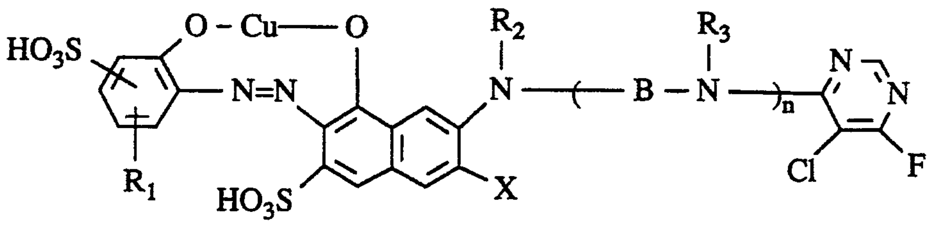

(I)

in welcher

B für ein Brückenglied der Formel

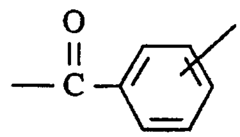

steht,

X für Wasserstoff oder Sulfo steht,

$R_1$ für Wasserstoff, Chlor, Methyl oder Methoxy steht,

$R_2$ und $R_3$ unabhängig voneinander für Wasserstoff, $C_1$-$C_4$-Alkyl oder $C_1$-$C_4$-Hydroxyalkyl stehen und

n für 0 oder 1 seht,

mit der Maßgabe, daß

X nicht für Sulfo steht, wenn n für 0 steht,

Verfahren zu ihrer Herstellung und ihre Verwendung zum Färben oder Bedrucken von hydroxyl- oder amidgruppenhaltigen Materialien.

Bevorzugt sind Farbstoffe der Formel (I) in welchen

$R_2$ und $R_3$ unabhängig voneinander für Wasserstoff, Methyl oder 2-Hydroxyethyl stehen und

B, X, $R_1$ und n die oben angegebene Bedeutung haben.

Die neuen Farbstoffe der Formel (I) können hergestellt werden, indem man Verbindungen der Formel

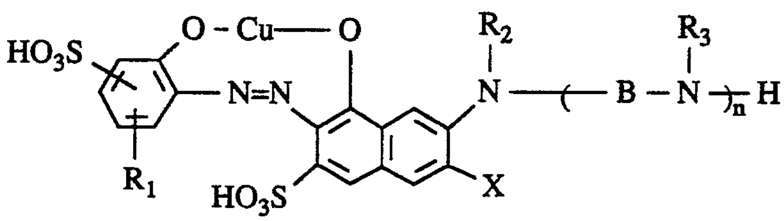

(II)

in welcher

B, X, $R_1$, $R_2$, $R_3$ und n die oben angegebene Bedeutung haben,

mit der Maßgabe, daß

X nicht für Sulfo steht, wenn für 0 steht,

mit 5-Chlor-4,6-difluorpyrimidin umsetzt.

Die Verbindungen der Formel (II) erhält man, indem man o-Aminoanisolsulfonsäuren der Formel

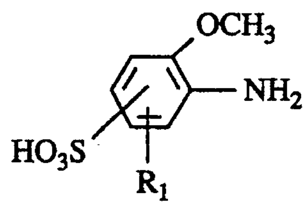

(III)

in welcher

$R_1$ die oben angegebene Bedeutung hat,

diazotiert und mit Aminonaphtholsulfonsäuren der Formel

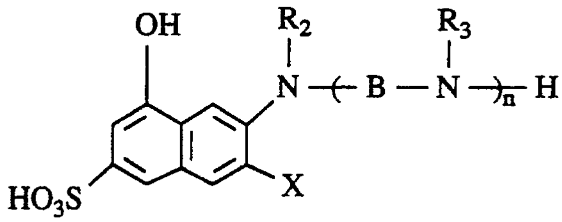

(IV)

in welcher

X, $R_2$, $R_3$, B und n die oben angegebene Bedeutung haben,

mit der Maßgabe, daß

X nicht für Sulfo steht, wenn n für 0 steht,

kuppelt und die so erhaltenen Kupplungsprodukte entalkylierend in ihre Kupfer-(II)-Komplexe überführt.

Beispiele für Verbindungen der Formel (III) sind:

3-Amino-4-methoxybenzolsulfonsäure,
4-Amino-3-methoxybenzolsulfonsäure,
4-Amino-2-chlor-5-methoxybenzolsulfonsäure,
4-Amino-2,5-dimethoxybenzolsulfonsäure,
4-Amino-5-methoxy-2-methylbenzolsulfonsäure.

Beispiele für Aminonaphtolsulfonsäuren der Formel (IV) sind:

6-Amino-4-hydroxy-naphthalin-2,7-disulfonsäure (RR-Säure), 6-Amino-4-hydroxy-naphthalin-2-sulfonsäure (Gammasäure), N-Methylgammasäure, N-Methyl-RR-Säure, N-(2-hydroxyethyl)-gammasäure, N-(2-Hydroxyethyl)-RR-Säure oder ihre N-(o-Aminobenzoyl)-, N-(m-Aminobenzoyl)- oder N-(p-Aminobenzoyl)-derivate.

Verbindungen der Formel (II), in welcher

X für Wasserstoff und

n für 0 steht,

erhält man, indem man o-Aminophenolsulfonsäuren der Formel

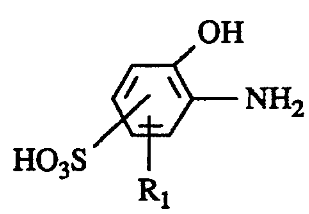

(V)

in welcher

$R_1$ die oben angegebene Bedeutung hat,

diazotiert und mit Aminonaphtholsulfonsäuren der Formel (IVa) in welcher

X für Wasserstoff und

n für 0 steht,

kuppelt und mit Kupfer-(II)-Salzen in die entsprechenden Komplexe überführt.

Beispiele für Verbindungen der Formel (V) sind:

3-Amino-4-hydroxybenzolsulfonsäure,

4-Amino-3-hydroxybenzolsulfonsäure,
4-Amino-2-chlor-5-hydroxybenzolsulfonsäure,
4-Amino-5-hydroxy-2-methylbenzolsulfonsäure.

Beispiele für Aminonaphtholsulfonsäuren der Formel (IVa) sind:
Gammasäure, N-Methylgammasäure, N-(2-Hydroxyethyl)-gammasäure.

Die Umsetzung mit dem 5-Chlor-4,6-difluorpyrimidin erfolgt in wäßrigem Medium bei Temperaturen zwischen 20 °C und 100 °C bei pH-Werten zwischen 4 und 10.

Die Farbstoffe der Formel (I) können isoliert und zu trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe herstellen.

Die Reaktivfarbstoffe der Formel (I) zeichnen sich durch hohe Reaktivität aus und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die Reaktivfarbstoffe der Formel (I) eignen sich zum Färben und Bedrucken der verschiedensten beispielsweise Hydroxylgruppen oder Amidgruppen enthaltenden Substrate, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können aber auch als konzentrierte Lösungen eingesetzt werden.

Beispiel 1

20,3 g 3-Amino-4-methoxybenzolsulfonsäure wurden in 300 ml Wasser und 15 ml konzentrierter Salzsäure suspendiert und bei 5 °C mit 6,9 g Natriumnitrit diazotiert. 43,8 g N-(4-Aminobenzoyl)-RR-Säure wurden in 500 ml Wasser bei 5 °C und einem pH-Wert von 6 suspendiert. Man ließ die Lösung der Diazoniumverbindung zutropfen, wobei man den pH-Wert mittels Soda-Lösung konstant hielt. Nach Beendigung der Kupplung wurden 28 g Kupfersulfat x 5 $H_2O$ und 45,0 g Diethanolamin zugegeben. Der Ansatz wurde 6 Stunden auf 98 °C erhitzt, wobei der Kupferkomplex des Kupplungsproduktes entstand. Das Produkt wurde durch Zugabe von 200 g Salz ausgefällt und isoliert. Die Paste wurde in 500 ml Wasser bei 40 °C und einem pH-Wert von 7,5 gelöst. Man gab 18 g 5-Chlor-4,6-difluorpyrimidin zu und rührte 3 Stunden, wobei man den pH-Wert mittels Soda-Lösung konstant hielt. Der entstandene Reaktivfarbstoff wurde durch Zugabe von 200 g Salz ausgefällt, isoliert und bei 40 °C im Vakuum getrocknet. Er färbt Baumwolle blaustichig rot.

Beispiel 2 und 3

Verwendete man anstatt der in Beispiel 1 eingesetzten Kupplungskomponente N-(2-Aminobenzoyl)-RR-Säure oder N-(3-Aminobenzoyl)-RR-Säure, so erhielt man ebenfalls Farbstoffe, die Baumwolle blaustichigrot anfärben.

Beispiel 4 bis 7

Verwendete man anstatt der in Beispiel 1 eingesetzten Diazokomponente äquimolare Mengen 4-Amino-3-methoxybenzolsulfonsäure, 4-Amino-2-chlor-5-methoxybenzolsulfonsäure, 4-Amino-2,5-dimethoxybenzolsulfonsäure oder 4-Amino-5-methoxy-2-methylbenzolsulfonsäure so erhielt man Reaktivfarbstoffe, die Baumwolle rotviolett anfärben.

Beispiel 8

18,9 g 3-Amino-4-hydroxybenzolsulfonsäure wurden in 300 ml Wasser und 5 ml konzentrierter Salzsäure suspendiert und bei 10 °C mit 6,9 g Natriumnitrit diazotiert. 23,9 g Gammasäure wurden in 500 ml Wasser mit verdünnter Natronlauge bei 20 °C und einem pH-Wert von 7,5 gelöst. Man ließ die Lösung der Diazoniumverbindung zutropfen, wobei man den pH-Wert mittels verdünnter Natronlauge konstant hielt. Nach Beendigung der Kupplung stellte man den pH-Wert der Reaktionsmischung mit verdünnter Salzsäure auf 6, und gab anschließend 28 g Kupfersulfat x 5 $H_2O$ hinzu. Nach Beendigung der Komplexbildung stellte man den pH-Wert der Suspension mittels Soda-Lösung auf 7,5 und erwärmte auf 40 °C. Man gab 18 g 5-Chlor-4,6-difluorpyrimidin zu und rührte 3 Stunden, wobei man den pH-Wert mittels Soda-Lösung konstant hielt. Der entstandene Reaktivfarbstoff wurde durch Zugabe von 200 g Salz ausgefällt, isoliert und bei 40 °C im Vakuum getrocknet. Er färbt Baumwolle blaustichig rot.

Beispiel 9 und 10

Verwendete man anstatt der in Beispiel 8 verwendeten Kupplungskomponente äquimolare Mengen N-Methylgammasäure oder N-(2-Hydroxyethyl)-gammasäure, so erhielt man ebenfalls Farbstoffe, die Baumwolle blaustichig-rot anfärben.

Beispiel 11

Verwendete man anstatt der in Beispiel 1 eingesetzten Kupplungskomponente eine äquimolare Menge N-(4-Aminobenzoyl)-gammasäure, so erhielt man ebenfalls einen Farbstoff, der Baumwolle blaustichig-rot anfärbt.

Beispiel 12 bis 15

Verwendete man anstatt der in Beispiel 11 eingesetzten Diazakomponente äquimolare Mengen 4-Amino-3-methoxybenzolsulfonsäure, 4-Amino-2-chlor-5-methoxybenzolsulfonsäure, 4-Amino-2,5-dimethoxybenzolsulfonsäure oder 4-Amino-5-methoxy-2-methylbenzolsulfonsäure, so erhielt man Reaktivfarbstoffe, die Baumwolle rot-violett arfärben.

Beispiel 16 bis 18

Verwendete man anstatt der in Beispiel 8 eingesetzten Diazokomponente äquimolare Mengen 4-Amino-3-hydroxybenzolsulfonsäure, 4-Amino-2-chlor-5-hydroxybenzolsulfonsäure oder 4-Amino-5-hydroxy-2-methylbenzolsulfonsäure, so erhielt man ebenfalls Reaktivfarbstoffe, die Baumwolle rot-violett anfärben.

Beispiel 19

Verwendet man anstatt der in Beispiel 1 eingesetzten Diazokomponente eine äquimolare Menge 5-Amino-2,4-dimethoxybenzolsulfonsäure, so erhält man einen Farbstoff, der Baumwolle blaustichig-rot anfärbt,

Beispiele 20 und 21

Verwendet man anstatt der in Beispiel 19 eingesetzten Kupplungskomponente äquimolare Mengen Gammasäure bzw. N-(4-Aminobenzoyl)-gammasäure, so erhält man Farbstoffe, die Baumwolle blaustichig-rot anfärben.

**Patentansprüche**

1. Reaktivfarbstoffe der Formel

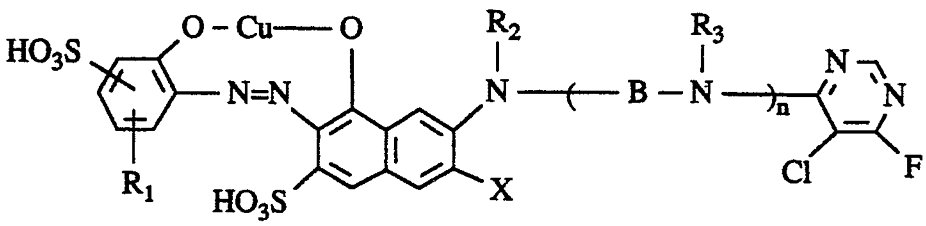

(I)

in welcher

B für ein Brückenglied der Formel

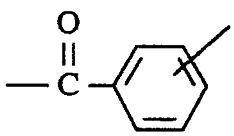

steht,

X für Wasserstoff oder Sulfo steht,

$R_1$ für Wasserstoff, Chlor, Methyl oder Methoxy steht,

$R_2$ und $R_3$ unabhängig voneinander für Wasserstoff, $C_1$-$C_4$-Alkyl oder $C_1$-$C_4$-Hydroxyalkyl stehen und

n für 0 oder 1 seht,

mit der Maßgabe, daß

X nicht für Sulfo steht, wenn n für 0 steht,

2. Farbstoffe des Anspruchs 1, in welchen $R_2$ und $R_3$ unabhängig voneinander für Wasserstoff, Methyl oder 2-Hydroxyethyl stehen.

3. Verwendung der Farbstoffe der Ansprüche 1 und 2 zum Färben oder Bedrucken von hydroxyl- oder amidgruppenhaltigen, natürlichen oder synthetischen Materialien.

4. Mit Farbstoffen der Ansprüche 1 und 2 gefärbte natürliche oder synthetische, hydroxyl- oder amidgruppenhaltige Materialien.